# FASCICULE DE BREVET EUROPEEN

(11) **EP 4 577 444 B1**
(45) Date de publication et mention de la délivrance du brevet: **26.08.2026**
(21) Numéro de dépôt: 23750663.9
(22) Date de dépôt: 19.07.2023
(51) Int. Cl.: B62D 21/11, B60K 7/00, B60K 1/00, B62D 27/06, B62D 65/02

(54) **TRAIN ARRIÈRE DE VÉHICULE AUTOMOBILE FIXÉ SUR UNE EXTENSION DE DOUBLURE DU LONGERONNET**
AN EINER AUSKLEIDUNGSVERLÄNGERUNG DES LÄNGSTRÄGERS EINES KRAFTFAHRZEUGS BEFESTIGTES HECK
MOTOR VEHICLE BACK END FASTENED TO A LINING EXTENSION OF THE LONGITUDINAL BEAM

(30) Priorité: 22.08.2022 FR 2208433
(43) Date de publication de la demande: 02.07.2025
(73) Titulaire: Stellantis Auto SAS, 78300 Poissy (FR)
(72) Inventeur: BERTH, Stephane, 92320 CHATILLON (FR); GUILBAUT, Marc, 94140 ALFORTVILLE (FR)
(74) Mandataire: BCIP
(86) Numéro de dépôt international: PCT/FR2023/051113
(87) Numéro de publication internationale: WO 2024/042281

(56) Documents cités:
- EP-A1- 3 038 883
- FR-A1- 2 868 031
- FR-A1- 2 980 437
- FR-A1- 3 105 153

## Description

### Domaine technique

La présente invention revendique la priorité de la demande française 2208433 déposée le 22 août 2022.

La présente invention concerne le domaine des véhicules automobiles, plus particulièrement le domaine des châssis des véhicules automobiles.

### Technique antérieure

Les véhicules automobiles disposent d'un train arrière généralement fixé à une partie arrière de la caisse, et précisément fixé sur des longerons latéraux arrière, communément désignés par longeronnets. Ces derniers comprennent un environnement habituellement restreint pour recevoir la fixation avec le train arrière. Dans cette configuration, la fixation du train arrière sur les longeronnets doit être suffisamment compacte et rigide pour permettre l'absorption d'éventuels chocs arrière sur le châssis du véhicule automobile.

Le document de brevet publié FR 3 105 153 divulgue une structure de partie arrière de caisse de véhicule automobile comprenant un train arrière fixé au moyen d'organes de fixation présentés, respectivement, au droit des longerons latéraux et au droit des longeronnets disposés transversalement à distance desdits longerons latéraux.

Cependant, la solution proposée par le document nécessite l'utilisation de renforts au droit des organes de fixation, à la fois au niveau des longerons latéraux et des longeronnets. Une telle configuration alourdit et complexifie l'assemblage du train arrière, entraînant un coût associé élevé.

### Exposé de l'invention

La présente invention a pour objectif de pallier au moins un des inconvénients de l'état de la technique susmentionné. Plus particulièrement, l'invention a pour objectif de proposer une solution simple et économique permettant d'assurer une fixation optimale du train arrière sur la structure du véhicule automobile, et cela dans un environnement compact et sans engendrer une augmentation de la masse de l'ensemble.

À cet effet, l'invention a pour objet un véhicule automobile comprenant :
- un châssis comportant une partie arrière avec deux profilés s'étendant longitudinalement et parallèlement l'un à l'autre ;
- un train arrière comprenant un berceau rigidement fixé à chacun des deux profilés, remarquable en ce que chaque fixation du berceau à un des profilés comprend une vis traversant une paroi inférieure du profilé, une entretoise située dans le profilé, et un écrou en appui sur l'entretoise et situé dans le profilé, ledit écrou étant logé dans une cage fixée à une doublure du profilé.

Selon un mode de réalisation, la doublure est un embouti s'étendant le long du profilé, avec une section transversale formant deux marches d'escalier successives.

Selon un mode de réalisation, la section transversale de l'embouti comprend une portion centrale horizontale située entre les deux marches successives.

Selon un mode de réalisation, la section transversale de l'embouti comprend une extension s'étendant longitudinalement entre l'entretoise et l'écrou.

Selon un mode de réalisation, l'extension est libre d'une des deux marches successives, de manière à pouvoir se déformer librement en flexion lors du serrage de la vis.

Selon un mode de réalisation, l'embouti comprend une encoche formée dans la portion centrale horizontale de la section transversale dudit embouti, adjacente à l'extension de manière à favoriser une déformation libre en flexion de ladite extension lors du serrage de la vis.

Selon un mode de réalisation, l'encoche s'étend transversalement au profilé et à l'embouti, et dans la portion centrale horizontale de la section transversale dudit embouti.

Selon un mode de réalisation, l'extension présente une section en L avec une première portion centrale horizontale et une deuxième portion verticale fixée contre une paroi latérale du profilé.

Selon un mode de réalisation, la doublure s'étend sur au moins 50% d'une étendue longitudinale totale du profilé.

L'invention concerne également un profilé de section creuse et fermée, pour châssis de véhicule automobile, comprenant un orifice destiné à recevoir une vis de fixation, remarquable en ce que le profilé comprend une entretoise et un écrou, logés dans la section creuse et fermée et alignés avec l'orifice, l'écrou étant logé dans une cage fixée à une doublure dudit profilé, logée dans ladite section creuse et fermée.

Avantageusement, la fixation du berceau du train arrière aux profilés du véhicule automobile de l'invention permet d'assurer une fixation optimale, légère et peu encombrante, sans nécessité d'utilisation de renforts, simplifiant ainsi l'assemblage du train arrière et entraînant une réduction des coûts associés.

### Brève description des dessins

[Fig 1] représente une vue d'en dessous en perspective d'un véhicule automobile selon l'invention ;
[Fig 2] représente une vue en perspective d'un profilé de section creuse d'une partie arrière du châssis du véhicule de la figure 1 ;
[Fig 3] représente une vue en perspective d'un écrou logé dans une cage destinée à être fixée à une doublure du profilé de la figure 2.

### Description détaillée

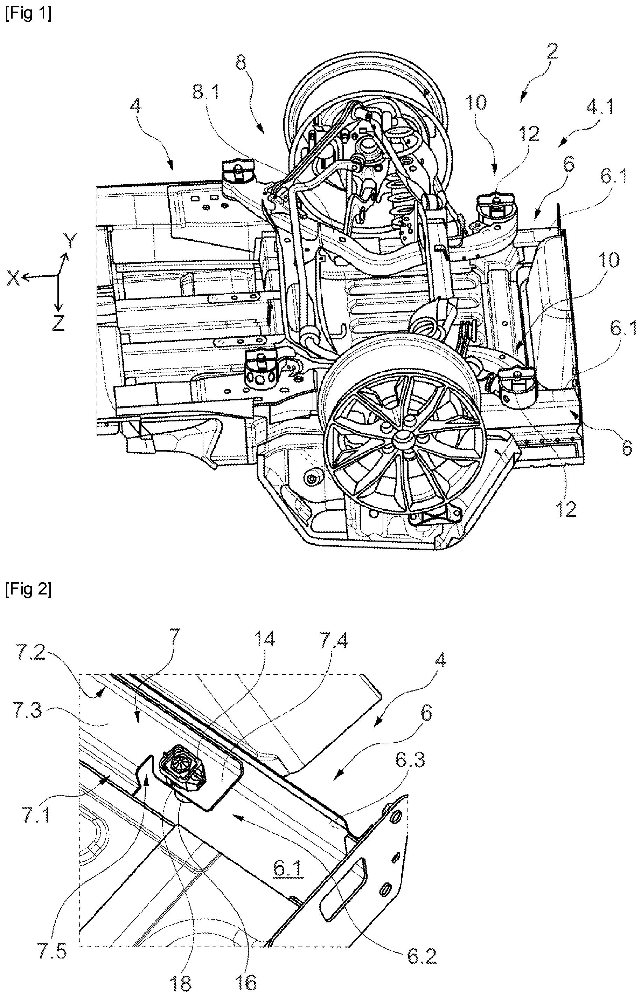

La figure 1 représente une vue d'en dessous en perspective d'un véhicule automobile 2 selon l'invention.

Le véhicule automobile 2 comprend un châssis 4 comportant une partie arrière 4.1 avec deux profilés 6, communément désignés par « longeronnets », s'étendant longitudinalement et parallèlement l'un à l'autre. Les profilés 6 sont préférentiellement reliés au bas de caisse et au plancher du véhicule automobile 2.

On peut voir qu'un train arrière 8 ayant un berceau 8.1 est fixé de manière rigide à chacun des deux profilés 6. Dans cette configuration, le berceau 8.1 comprend préférentiellement deux points de fixation arrière 10 correspondant à un point de fixation arrière droit et à un point fixation arrière gauche.

Chaque profilé 6 comprend une paroi inférieure 6.1 traversée par une vis 12 de fixation. A cet égard, la paroi inférieure 6.1 comprend un orifice (non illustré) destiné à recevoir la vis 12.

La figure 2 représente une vue en perspective du profilé 6 de la partie arrière 4.1 du châssis 4 du véhicule automobile 2 de la figure 1.

On peut observer une section creuse 6.2 et fermée du profilé 6. Préférentiellement, chacun des deux profilés 6 du véhicule automobile comprend une section creuse en forme de U.

Dans cette configuration, la partie creuse 6.2 du profilé 6 est délimitée, suivant la direction verticale Z illustrée à la figure 1, par la paroi inférieure 6.1 et par une doublure 7 s'étendant de préférence sur au moins une moitié d'une étendue longitudinale totale du profilé 6.

La doublure 7 est obtenue, de préférence, à partir d'une tôle emboutie avec une section transversale formant deux marches d'escalier successives 7.1 et 7.2, et comprenant une portion centrale horizontale 7.3 située entre les deux marches successives 7.1, 7.2.

La portion centrale horizontale 7.3 est préférentiellement parallèle à la paroi inférieure 6.1 du profilé 6.

La doublure 7 comprend avantageusement une extension 7.4 s'étendant longitudinalement vers l'arrière du véhicule automobile de manière à former une continuité de la portion centrale horizontale 7.3.

On peut voir sur la figure 2 qu'une cage 14 d'écrou est disposée au droit de l'extension 7.4. En effet, la vis 12 de la fixation 10 illustrée à la figure 1 traverse la doublure 7, et traverse précisément l'extension 7.4 de ladite doublure 7.

Dans cette configuration, l'extension 7.4 s'étend entre une entrecroise 16 située dans la partie creuse 6.2 du profilé 6 et un écrou 18 logé dans la cage 14. Préférentiellement, l'entretoise 16 est une pièce cylindrique creuse intégralement traversée par la vis de fixation.

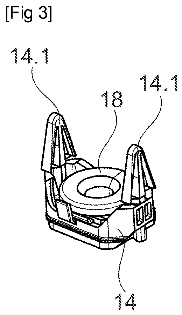

La figure 3 illustre l'écrou 18 logé dans la cage 14 fixée à l'extension 7.4 de la doublure 7 du profilé 6 de la figure 2.

En référence aux figures 2 et 3, la cage 14 est de préférence une pièce en plastique permettant de maintenir l'écrou 18 sur la doublure 7.

A cet égard, la cage 14 comprend avantageusement deux clips 14.1 ayant une forme en V destinés à traverser l'extension 7.4 de manière à assurer une retenue efficace de l'écrou 18. Les clips 14.1 s'étendent verticalement vers la paroi inférieure 6.1 et permettent, en outre, de maintenir en position et de limiter les déplacements de l'entretoise 16 dans la partie creuse 6.2 préalablement à la fixation de l'ensemble au moyen de la vis.

Dans cette configuration, la vis 12 de la fixation 10 de la figure 1 traverse intégralement et de manière verticale l'entretoise 16, l'écrou 18 et la cage 14.

Préférentiellement, l'extension 7.4 est dépourvue d'une des deux marches successives 7.1, 7.2, et est plus préférentiellement dépourvue de la marche 7.1 disposée intérieurement au châssis 4 suivant la direction transversale. Cela permet une déformation libre en flexion de l'extension 7.4 lors du serrage de la vis de fixation.

A cet effet, l'extension 7.4 présente une section en L, avec une première portion correspondant à la portion centrale horizontale 7.3, et avec une deuxième portion verticale 7.2 correspondant à la continuité longitudinale de la marche 7.2 disposée extérieurement au châssis 4, ladite deuxième portion verticale 7.2 étant fixée contre une paroi latérale 6.3 du profilé 6.

La doublure 7 comprend, en outre, une encoche 7.5 formée dans la portion centrale horizontale 7.3 de manière adjacente à l'extension 7.4. Préférentiellement, l'encoche 7.5 s'étend transversalement au profilé 6 et à la doublure 7, ladite encoche 7.5 étant débouchant intérieurement vers une partie centrale du châssis 4 et comprenant de préférence une section longitudinale divergente vers la partie centrale du châssis 4 suivant la direction transversale.

Avantageusement, l'encoche 7.5 permet de donner plus de souplesse à l'extension 7.4 afin de favoriser davantage sa déformation élastique en flexion. Cela permet d'assurer un serrage correct de l'entretoise 16 dans la partie creuse 6.2 du profilé 6.

De manière avantageuse, le profilé 6 de l'invention permet de fixer le berceau du train arrière sur le véhicule automobile de manière efficace avec un appui ferme de l'écrou sur l'entretoise sans nécessité de rajout de pièces de renforts supplémentaire, garantissant ainsi une légèreté à l'assemblage du véhicule automobile.

## Revendications

1. Véhicule automobile (2) comprenant :
- un châssis (4) comportant une partie arrière (4.1) avec deux profilés (6) s'étendant longitudinalement et parallèlement l'un à l'autre ;
- un train arrière (8) comprenant un berceau (8.1) rigidement fixé à chacun des deux profilés (6),
**caractérisé en ce que**
chaque fixation (10) du berceau (8.1) à un des profilés (6) comprend une vis (12) traversant une paroi inférieure (6.1) du profilé (6), une entretoise (16) située dans le profilé (6), et un écrou (18) en appui sur l'entretoise (16) et situé dans le profilé (6), ledit écrou (18) étant logé dans une cage (14) fixée à une doublure (7) du profilé (6).

2. Véhicule automobile (2) selon la revendication 1, dans lequel la doublure (7) est un embouti (7) s'étendant le long du profilé (6), avec une section transversale formant deux marches (7.1, 7.2) d'escalier successives.

3. Véhicule automobile (2) selon la revendication 2, dans lequel la section transversale de l'embouti (7) comprend une portion centrale horizontale (7.3) située entre les deux marches (7.1, 7.2) successives.

4. Véhicule automobile (2) selon la revendication 3, dans lequel la section transversale de l'embouti (7) comprend une extension (7.4) s'étendant longitudinalement entre l'entretoise (16) et l'écrou (18).

5. Véhicule automobile (2) selon la revendication 4, dans lequel l'extension (7.4) est libre d'une des deux marches (7.1, 7.2) successives, de manière à pouvoir se déformer librement en flexion lors du serrage de la vis (12).

6. Véhicule automobile (2) selon l'une des revendications 4 et 5, dans lequel l'embouti (7) comprend une encoche (7.5) formée dans la portion centrale horizontale (7.3) de la section transversale dudit embouti (7), adjacente à l'extension (7.4) de manière à favoriser une déformation libre en flexion de ladite extension (7.4) lors du serrage de la vis (12).

7. Véhicule automobile (2) selon la revendication 6, dans lequel l'encoche (7.5) s'étend transversalement au profilé (6) et à l'embouti (7), et dans la portion centrale horizontale (7.3) de la section transversale dudit embouti (7).

8. Véhicule automobile (2) selon l'une des revendications 4 à 7, dans lequel l'extension (7.4) présente une section en L avec une première portion centrale horizontale (7.3) et une deuxième portion verticale (7.2) fixée contre une paroi latérale (6.3) du profilé (6).

9. Véhicule automobile (2) selon l'une des revendications 1 à 8, dans lequel la doublure (7) s'étend sur au moins 50% d'une étendue longitudinale totale du profilé (6).

10. Profilé (6) de section creuse et fermée, pour châssis (4) de véhicule automobile (2), comprenant un orifice destiné à recevoir une vis (12) de fixation, **caractérisé en ce que** le profilé (6) comprend une entretoise (16) et un écrou (18), logés dans la section creuse et fermée (6.2) et alignés avec l'orifice, l'écrou (18) étant logé dans une cage (14) fixée à une doublure (7) dudit profilé (6), logée dans ladite section creuse et fermée (6.2).

## Patentansprüche

1. Kraftfahrzeug (2) mit:
- einem Rahmen (4) mit einem hinteren Teil (4.1) mit zwei sich in Längsrichtung und parallel zueinander erstreckenden Profilen (6);
- ein Hinterachsgetriebe (8) mit einem Gestell (8.1), das an jedem der beiden Profile (6) starr befestigt ist, **dadurch gekennzeichnet, dass** jede Befestigung (10) des Gestells (8.1) an einem der Profile (6) eine Schraube (12), die eine untere Wand (6.1) des Profils (6) durchquert, eine in dem Profil (6) befindliche Strebe (16) und eine auf der Strebe (16) aufliegende und in dem Profil (6) befindliche Mutter (18) umfasst, wobei die Mutter (18) in einem Käfig angeordnet ist (14), die an einer Auskleidung (7) des Profils (6) befestigt ist.

2. Kraftfahrzeug (2) nach Anspruch 1, bei dem das Futter (7) ein längs des Profils (6) verlaufender Stumpf (7) mit einem Querschnitt ist, der zwei aufeinander folgende Treppenstufen (7.1, 7.2) bildet.

3. Kraftfahrzeug (2) nach Anspruch 2, bei dem der Querschnitt des Stutzens (7) einen horizontalen Mittelabschnitt (7.3) umfasst, der zwischen den zwei aufeinander folgenden Stufen (7.1, 7.2) angeordnet ist.

4. Kraftfahrzeug (2) nach Anspruch 3, wobei der Querschnitt des Stutzens (7) eine Verlängerung (7.4) aufweist, die sich in Längsrichtung zwischen dem Abstandshalter (16) und der Mutter (18) erstreckt.

5. Kraftfahrzeug (2) nach Anspruch 4, wobei die Verlängerung (7.4) frei von einer der zwei aufeinander folgenden Stufen (7.1, 7.2) ist, sodass sie sich beim Anziehen der Schraube (12) frei biegen kann.

6. Kraftfahrzeug (2) nach einem der Ansprüche 4 und 5, bei dem der Ansatz (7) eine Kerbe (7.5) aufweist, die in dem horizontalen Mittelabschnitt (7.3) des Querschnitts des genannten Ansatzes (7) benachbart zu dem Ansatz (7.4) ausgebildet ist, um eine freie Biegeverformung des genannten Ansatzes (7.4) beim Anziehen der Schraube (12) zu begünstigen.

7. Kraftfahrzeug (2) nach Anspruch 6, wobei sich die Kerbe (7.5) quer zum Profil (6) und zum Stutzen (7) und in dem horizontalen Mittelabschnitt (7.3) des Querschnitts des Stutzens (7) erstreckt.

8. Kraftfahrzeug (2) nach einem der Ansprüche 4 bis 7, wobei die Verlängerung (7.4) einen L-förmigen Querschnitt mit einem ersten horizontalen Mittelabschnitt (7.3) und einem zweiten vertikalen Abschnitt (7.2) aufweist, der an einer Seitenwand (6.3) des Profils (6) befestigt ist.

9. Kraftfahrzeug (2) nach einem der Ansprüche 1 bis 8, bei dem sich die Auskleidung (7) über mindestens 50% einer gesamten Längserstreckung des Profils (6) erstreckt.

10. Profil (6) mit hohlem und geschlossenem Querschnitt für einen Rahmen (4) eines Kraftfahrzeugs (2), das eine Öffnung zur Aufnahme einer Befestigungsschraube (12) aufweist, **dadurch gekennzeichnet, dass** das Profil (6) einen Steg (16) und eine Mutter (18) aufweist, die in dem hohlen und geschlossenen Querschnitt (6.2) untergebracht und mit der Öffnung fluchtend angeordnet sind, wobei die Mutter (18) in einem Käfig (14) untergebracht ist, der an einer Auskleidung (7) des Profils (6) befestigt ist, die in dem hohlen und geschlossenen Querschnitt untergebracht ist (6.2)

## Claims

1. Motor vehicle (2) comprising:
- a frame (4) comprising a rear part (4.1) with two profiles (6) extending longitudinally and parallel to each other;
rear axle assembly (8) comprising a cradle (8.1) rigidly fixed to each of the two sections (6), **characterised in that** each fixing (10) of the cradle (8.1) to one of the sections (6) comprises a screw (12) passing through a lower wall (6.1) of the section (6), a spacer (16) located in the section (6), and a nut (18) bearing on the spacer (16) and located in the section (6), said nut (18) being housed in a cage (14) fixed to a lining (7) of the section (6).

2. Motor vehicle (2) according to Claim 1, in which the lining (7) is a stamped part (7) extending along the profile (6), with a cross-section forming two successive steps (7.1, 7.2) of stairs.

3. A motor vehicle (2) according to claim 2, in which the cross-section of the stamped part (7) comprises a horizontal central portion (7.3) located between the two successive steps (7.1, 7.2).

4. Motor vehicle (2) according to Claim 3, in which the cross-section of the stamped part (7) comprises an extension (7.4) extending longitudinally between the spacer (16) and the nut (18).

5. A motor vehicle (2) according to Claim 4, in which the extension (7.4) is free of one of the two successive steps (7.1, 7.2), so as to be able to deform freely in bending when the screw (12) is tightened.

6. Motor vehicle (2) according to one of Claims 4 and 5, in which the stamped part (7) comprises a notch (7.5) formed in the horizontal central portion (7.3) of the cross-section of said stamped part (7), adjacent to the extension (7.4) so as to promote a free bending deformation of said extension (7.4) during tightening of the screw (12).

7. Motor vehicle (2) according to Claim 6, in which the notch (7.5) extends transversely to the profile (6) and to the stamped part (7), and in the horizontal central portion (7.3) of the cross-section of said stamped part (7).

8. Motor vehicle (2) according to one of Claims 4 to 7, in which the extension (7.4) has an L-shaped section with a first horizontal central portion (7.3) and a second vertical portion (7.2) fixed against a side wall (6.3) of the profile (6).

9. A motor vehicle (2) according to one of Claims 1 to 8, in which the lining (7) extends over at least 50% of a total longitudinal extended of the section (6).

10. Profile (6) of hollow and closed section, for a motor vehicle chassis (4), comprising an orifice intended for a fixing screw (12), **characterised in that** the profile (6) comprises a spacer (16) and a nut (18), housed in the hollow and closed section (6.2) and aligned with the orifice, the nut (18) being housed in a cage (14) fixed to a lining (7) of said profile (6), housed in said hollow and closed section (6.2).
